# EUROPÄISCHE PATENTSCHRIFT

(11) **EP 1 659 306 B1**
(45) Veröffentlichungstag und Bekanntmachung des Hinweises auf die Patenterteilung: **12.11.2008**
(21) Anmeldenummer: 04027740.2
(22) Anmeldetag: 23.11.2004
(51) Int. Cl.: F16D 13/64

(54) **Reiblamelle sowie Verfahren zum Einbringen einer Nut in den Reibbelag einer Reiblamelle**
Friction disc and method for forming a groove into the friction material of a friction disc
Lamelle de friction et procédé de formation d'une rainure dans le matériau de friction d'une lamelle de friction

(43) Veröffentlichungstag der Anmeldung: 24.05.2006
(73) Patentinhaber: BorgWarner Inc., Auburn Hills, MI 48326 (US)
(72) Erfinder: Merkel, Harald, 74889 Sinsheim (DE)
(74) Vertreter: Neunert, Peter Andreas

(56) Entgegenhaltungen:
- DE-A1- 19 849 790
- US-A- 2 541 979

## Beschreibung

Die Erfindung betrifft eine Reiblamelle nach dem Oberbegriff des Patentanspruchs 1, einen Reibbelag für eine Reiblamelle nach dem Oberbegriff des Patentanspruchs 9, ein Verfahren zum Einbringen einer Nut in den Reibbelag einer Reiblamelle bzw. den Reibbelag für eine Reiblamelle nach dem Oberbegriff der Patentansprüche 17, 18 und 19, sowie eine Vorrichtung zum Einbringen einer Nut in den Reibbelag einer Reiblamelle bzw. den Reibbelag für eine Reiblamelle nach dem Oberbegriff der Patentansprüche 20, 21 und 22.

Reiblamellen für sogenannte nasslaufende Kupplungen, Bremsen oder dergleichen sind aus dem Stand der Technik in einer Vielzahl von Abwandlungen bekannt. Beispielhaft wird auf die EP 0 305 582 A1 sowie die US 5,571,372 verwiesen.

In der Fachsprache auch unter der Bezeichnung Belaglamellen bekannte Reiblamellen umfassen im allgemeinen einen Träger, bei dem auf eine oder beide Ringflächen ein Reibbelag bzw. Reibbeläge aufgebracht ist bzw. sind. Der Träger, welcher in der Fachsprache auch als Trägerlamelle oder Trägerblech bezeichnet wird, besteht in der Regel aus einem metallischen Material mit hinreichender Steifigkeit. Der Reibbelag besteht regelmäßig aus einer papierartigen Folie mit variierender Zusammensetzung, vorwiegend aus Zellulose und/oder Kunststoff-Fasern, die mit Füllmaterial aufgefüllt sind. Das Reibmaterial wird in der Regel mit einem harzartigen Polymer getränkt und anschließend unter hohen Temperaturen ausgehärtet.

Der Reibbelag weist im Allgemeinen Nuten zur Kühlmittelführung, insbesondere Kühlölführung, auf. Die Nutung der Belaglamellen hat grundsätzlich drei Aufgaben zu erfüllen. Bei geschlossener Kupplung oder Bremse muss ein ausreichender Nutquerschnitt vorhanden sein, um einen hinreichenden Kühlmitteldurchfluss zur Kühlung der Oberflächen der aneinander reibenden Flächen zu gewährleisten. Bei geöffneter Kupplung oder Bremse muss der Nutquerschnitt hinreichend groß sein, um die Dicke des sich bildenden Fluidfilm zwischen benachbarten Lamellen zur Reduzierung von Schleppmomenten möglichst gering zu halten. Darüber hinaus muss die Nutfläche im Reibbelag möglichst klein sein, um das Drehmoment über die allein Drehmoment übertragende Reibfläche übertragen zu können. Es muss also stets ein Kompromiss zwischen hinreichend großem Nutquerschnitt zur Gewährleistung einer ausreichenden Reibleistungsabfuhr bei geschlossener Kupplung oder Bremse und tolerierbarem Schleppmoment bei geöffneter Kupplung oder Bremse sowie hinreichend großer verbleibender Reibfläche zur Gewährleistung einer ausreichenden Drehmomentübertragung gefunden werden.

Heute übliche Verfahren zum Einbringen von Nuten in den organischen Belag, Carbon- oder Sinterbelag von Reiblamellen sind Fräsen (vgl. EP 0 305 582 A1), Einprägen mittels Prägewerkzeugen (vgl. EP 0 305 582 A1), Einrollen (vgl. EP 01 124 913 A1) oder Ausstanzen von Belagsegmenten und anschließendes Anordnen der Belagsegmente in einem Nuten bildenden Abstand (vgl. US 5,571,372).

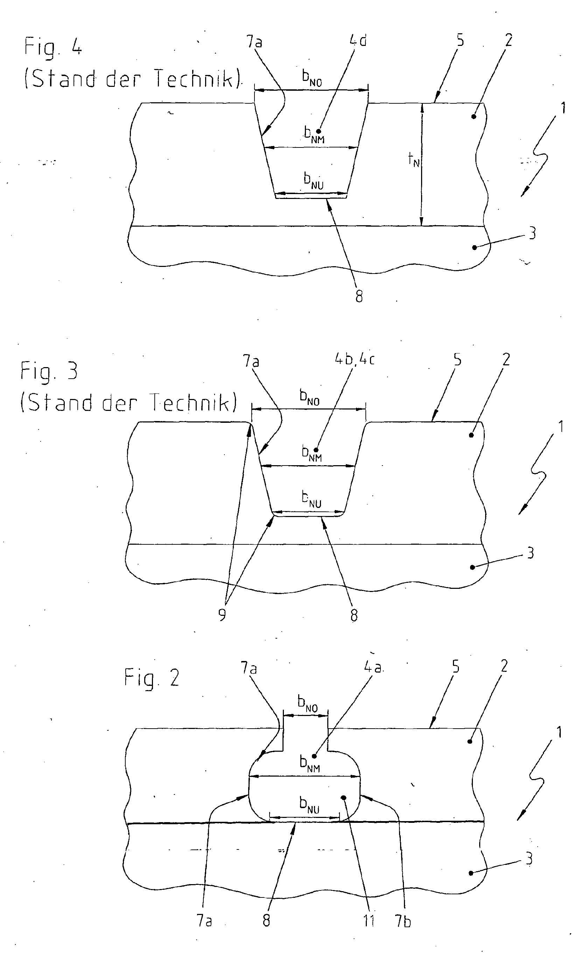

Die Figur 4 zeigt einen Ausschnitt einer Reiblamelle 1 gemäß dem Stand der Technik im Querschnitt. Die dargestellte Reiblamelle ist in an sich üblicher Weise ausgebildet. Es ist eine Trägerlamelle 3 vorgesehen auf den ein Reibbelag 2 aufgebracht ist. In den Reibbelag 2 der Reiblamelle 1 ist durch Fräsen eine Nut 4d eingebracht worden, welche den in der Figur 4 dargestellten charakteristischen trapezförmigen Nutquerschnitt mit von der Reibfläche 5 in Richtung des Nutbodens 8 im wesentlichen linear abnehmenden Nutbreite b_{N} aufweist. Die Breite b_{NO} der Nut 4d an der Reib(ober)fläche 5 ist folglich größer als die Nutbreite b_{NM} bei halber Nuttiefe t_{N}. Die Nutbreite b_{NM} bei halber Nuttiefe t_{N} übersteigt wiederum die Nutbreite b_{NU} am Nutboden 8.

Sehr ähnlich sind die Verhältnisse, wenn die Nuten mit Hilfe eines Präge- oder Rollverfahrens eingebracht sind. Die Figur 3 zeigt einen Ausschnitt einer Reiblamelle 1 gemäß dem Stand der Technik im Querschnitt, bei welcher eine Nut 4b, 4c durch Prägen oder Einrollen in den Reibbelag 2 der Reiblamelle 1 eingebracht worden ist. Der Nutquerschnitt ist auch hier im wesentlichen trapezförmig mit von der Reibfläche 5 in Richtung des Nutbodens 8 im wesentlichen linear abnehmender Nutbreite b_{N}. Aufgrund der Verformung des Reibbelags 2 im Bereich der eingeprägten Nut 4b bzw. der eingerollten 4c beim Einbringen der Nut 4b, 4c durch das Präge- oder Rollwerkzeug sind die Nutränder 7a, 7b anders als bei dem vorstehend beschriebenen materialabtragenden Fräsverfahren in der Nähe der Reibfläche 5 und des Nutbodens 8 üblicherweise abgerundet. In der Zeichnung ist dies durch die Rundung 9 angedeutet.

Obwohl sich Nuten mit den vorstehend beschriebenen Querschnitten und die entsprechenden Verfahren zu deren Einbringung dem Grunde nach bewährt haben, besteht weiterhin das Bedürfnis, die bei der Drehmomentübertragung entstehende Reibleistung effizienter abzuführen.

Die Aufgabe der Erfindung besteht demzufolge darin, eine Reiblamelle bzw. einen entsprechenden Reibbelag mit verbesserten Reibleistungsabführeigenschaften bereitzustellen. Eine weitere Aufgabe der Erfindung besteht darin, ein geeignetes Verfahren und die zugehörige Vorrichtung zur Herstellung einer derartigen Reiblamelle bzw. eines entsprechenden Reibbelags vorzustellen.

Diese Aufgabe wird durch eine Reiblamelle mit den Merkmalen des Patentanspruchs 1, einen Reibbelag mit den Merkmalen des Patentanspruchs 9, ein Verfahren mit den Merkmalen der Ansprüche 17, 18 oder 19 sowie eine Vorrichtung mit den Merkmalen der Ansprüche 20, 21 oder 22 gelöst.

Vorteilhafte Ausführungen und Weiterbildungen der Erfindung sind in den Unteransprüchen angegeben.

Die Erfindung geht von der Tatsache aus, dass eine Verbreiterung der Nut stets mit einer Reduzierung der verbleibenden Reibfläche verbunden ist. Dies hat regelmäßig zur Folge, dass die flächenbezogene Reibleistung sowie die flächenbezogene Pressung steigt, was zu einer Verringerung der Lebensdauer des Reibmaterials führt.

Auch eine Vergrößerung der Nuttiefe auf eine Tiefe, die der Reibbelagdicke entspricht und nur mittels eines materialabtragenden Verfahrens oder des in der US 5,571,372 beschriebenen Ausstanz- und Segmentanordnungsverfahrens, nicht aber mittels eines Präge- oder Einrollverfahrens herstellbar ist, hat eingehenden Untersuchungen zufolge keinen wesentlichen Einfluss auf den maximal möglichen Reibleistungsabtransport. Eine weitere Ausdehnung der Nuttiefe in die Trägerlamelle hinein mag zwar in Einzelfällen möglich sein, scheidet in der Regel jedoch aus Stabilitätsgründen aus.

Die Erfindung beruht daher auf der Idee, den Nutquerschnitt zu vergrößern, ohne die Tiefe der Nut oder die Breite der Nut im Bereich der Reibfläche gegenüber herkömmlichen Nuten zu verändern.

Erfindungsgemäß weist der Reibbelag der Reiblamelle bzw. der Reibbelag für die Reiblamelle wenigstens eine Nut auf, welche im Bereich wenigstens eines der Nutränder eine Hinterschneidung auf. In der Mehrzahl der Fälle wird es günstig sein, wenn alle für die Belagkühlung und Schleppmomentreduzierung vorgesehenen Nuten eine derartige Hinterschneidung aufweisen. Nicht nur aus Symmetriegründen ist es günstig wenn im Bereich beider Nutränder Hinterschneidungen vorgesehen sind. Im Falle von Sacknuten gilt dies selbstverständlich auch für den Endbereich.

Eine derartige erfindungsgemäße Nutform hat den Vorteil eines maximalen spezifischen Kühlmittelflusses durch die Nut(en) der Lamelle(n) eines entsprechenden Drehmomentübertragungsaggregats möglich ist. Dabei wird durch die gezielte Hinterschneidung die spezifische wirksame Reibbelagfläche gegenüber herkömmlich breiten Nuten vergrößert. Dadurch lassen sich spezifische Reibeigenschaften erzeugen, die ein Maximum an Kühlleistung sowie ein Optimum hinsichtlich der Dämpfung von Reibschwingungen darstellen.

Eine Mehrzahl an Tests haben ergeben, dass eine signifikante Verbesserung der Kühlleistung bei im wesentlichen gleichen Reibeigenschaften dann eintritt, wenn die Hinterschneidungstiefe mindestens 10 %, vorzugsweise 15 % bis 25 %, der Nuttiefe beträgt.

Die Hinterschneidungsausdehnung über der Tiefe der Nut sollte Vorteilhafterweise wenigstens 50 %, vorzugsweise 70 % bis 80 %, der Nuttiefe betragen.

Weiterhin hat es sich als günstig herausgestellt, wenn die Belagdicke über der Hinterschneidung wenigstens 10 %, vorzugsweise 15 % bis 30 %, der Nuttiefe beträgt. Damit wird eine hinreichende Stabilität des die Hinterschneidung überragenden Reibbelags erreicht, welche noch eine hinreichende Drehmomentübertragung erlaubt.

Ein Optimum an mechanischer Stabilität bei gleichzeitiger hoher Kühlleistung wird dann erreicht, wenn sich die Hinterschneidung von dem Hinterschneidungsansatzpunkt bis zum Nutboden hinunter oder zumindest bis in die unmittelbare Nähe des Nutbodens erstreckt.

Sehr gute Resultate lassen sich erreichen, wenn die Hinterschneidung einen trapezförmigen oder trapezformähnlichen Querschnitt aufweist. Auch das Verfahren zum Einbringen einer derartigen Hinterschneidung gestaltet sich vergleichsweise einfach, wie im nachfolgenden näher erläutert wird.

Eine von der Trapezform abweichende Hinterschneidungsgestalt mit ähnlich guten oder ggf. sogar besseren Ergebnissen besteht in einer Dreiecksform oder einer der Dreiecksform angenäherten Gestalt, nämlich indem die Tiefenausdehnung der Hinterschneidung mit der Nuttiefe in Richtung des Nutbodens zunimmt. Damit wird erreicht, dass die Belagdicke über der Hinterschneidung hinreichend groß ist, um eine hohe mechanische Stabilität für die Drehmoment- und Kraftübertragung bereitzustellen wobei gleichzeitig ein hoher Kühlfluidfluss im Bodenbereich der Nut(en) möglich ist.

Ein hoher Kühlmittelfluss ist grundsätzlich dann gewährleistet, wenn de Tiefe der Nut mit der Belagdicke übereinstimmt.

Es sei ausdrücklich darauf hingewiesen, dass der Reibbelag mit der entsprechenden Hinterschneidung unabhängig von der Reiblamelle hergestellt werden und erst in einem nachfolgenden Verfahrensschritt auf den Lamellenträger aufgesetzt werden kann. Es ist jedoch auch möglich, die Hinterschneidung in die Nut des Reibbelags einzubringen, wenn der Reibbelag bereits mit dem Lamellenträger verbunden ist.

Es kommen eine Mehrzahl von Verfahren zum Einbringen einer Nut der vorstehend angegebenen Art in einen Reibbelag in Betracht.

Ein erstes bevorzugtes Verfahren gemäß der Erfindung besteht darin die wenigstens eine Nut derart einzustanzen, dass sie im Bereich eines Nutrandes, vorzugsweise im Bereich beider Nutränder, eine Hinterschneidung aufweist.

Konkret kann dies mit einer Vorrichtung der nachfolgend angegebenen Art erfolgen. Es ist z. B. eine Stanzvorrichtung vorgesehen, um die wenigstens eine Nut derart einzustanzen, dass sie im Bereich eines Nutrandes, vorzugsweise im Bereich beider Nutränder, eine Hinterschneidung aufweist.

Ein weiteres Verfahren zum Einbringen einer Nut der vorstehend beschriebenen Art stellt ein Strahlverfahren wie z.B. Sandstrahlen oder Glasperlenstrahlen dar.

Schließlich kann die wenigstens eine Nut der vorstehend beschriebenen Art auch mit Hilfe eines Fräsverfahrens durch einen entsprechenden Formfräser eingebracht werden.

Die Erfindung wird nunmehr anhand der Zeichnungen näher beschrieben. Gleiche oder funktionsgleiche Bestandteile sind in den Figuren mit identischen Bezugszeichen versehen. Es zeigen:
- Figur 1:: Eine Detailansicht einer erfindungsgemäßen Reiblamelle, in deren Reibbelag eine Nut mit einer Hinterschneidung eingebracht ist, im Querschnitt.
- Figur 2:: Eine Querschnittsdarstellung der erfindungsgemäßen Reiblamelle nach der Figur 1 in Gegenüberstellung zu den in den Figuren 3 und 4 dargestellten herkömmlichen Reiblamellen gemäß dem Stand der Technik.
- Figur 3:: Eine Querschnittsdarstellung einer Reiblamelle nach dem Stand der Technik, in deren Reibbelag eine Nut eingefräst wurde.
- Figur 4:: Eine Querschnittsdarstellung einer Reiblamelle nach dem Stand der Technik, in deren Reibbelag eine Nut eingeprägt oder eingerollt wurde.

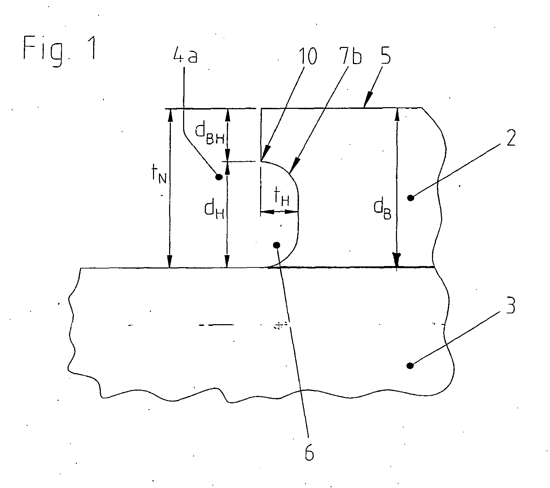

Die Figuren 1 und 2 zeigen eine Reiblamelle 1, in deren Reibbelag 2 in erfindungsgemäßer Weise eine Nut 4a eingestanzt wurde. Dargestellt ist ein Detail der Reiblamelle 1 im Querschnitt.

Aus beiden Figuren 1 und 2 entnimmt man, dass die Reiblamelle 1 eine Trägerlamelle 3 und einen auf diese Trägerlamelle 3 aufgebrachten Reibbelag 2 umfasst. Die Dicke des Reibbelags 2 ist mit dem Bezugszeichen d_{B} gekennzeichnet.

In den Reibbelag 2 sind eine Mehrzahl von Nuten 4a eingebracht, von denen eine im Detail im Querschnitt sichtbar ist. Die Tiefe der Nut 4a ist in der Zeichnung mit dem Bezugszeichen t_{N} gekennzeichnet. Vorliegend stimmt die Tiefe t_{N} der Nut 4a mit der Dicke d_{B} des Reibbelags 2 überein, weil der Stanzvorgang ähnlich wie bei dem in der US 5,571,372 beschriebenen Verfahren bis zur Trägerlamelle 3 ausgeführt wurde. Jedoch kann z.B. durch Einfräsen, Einprägen oder Einrollen der Nut auch ein nicht vollständiges Abtrennen des Reibbelags 2 im Bereich der Nut 4a erreicht werden. Dann wäre die Tiefe t_{N} der Nut 4a kleiner als die Dicke d_{B} des Reibbelags 2.

Während die Nuten 4b, 4c, 4d nach dem Stand der Technik derart eingebracht, dass die die Nuten 4b, 4c, 4d begrenzenden und nachfolgend als Nutränder bezeichneten Seitenwandungen 7a, 7b ausgehend von der Reibbelagoberfläche 5 in Richtung des Nutbodens 8 zur Nutsymmetrieachse hin geneigt verlaufen, weist die Nut 4a gemäß der Erfindung auf der der Reibfläche 5 abgewandten Seite eine Hinterschneidung 6 auf. Die Nutbreite b_{N} ist folglich im Bereich der Reibfläche 5 kleiner als in tieferliegenden Bereichen und insbesondere im Bereich des Nutbodens 8. Während die Nutbreite b_{NO} in der Nähe der Reibfläche 5 bis zu einem Hinterschneidungsansatzpunkt 10 in etwa gleich ist (in der Figur 1 ist dies durch die Angabe der Belagdicke d_{BH} über der Hinterschneidung 6 kenntlich gemacht), nimmt die Nutbreite b_{N} zur Mitte der Hinterschneidungsausdehnung d_{H} über der Tiefe der Nut 4a auf den Wert b_{NM} zu und danach aufgrund des trapez-ähnlichen Querschnitts 11 der Hinterschneidung 6 wieder auf den Wert b_{NU} ab.

Im vorliegenden Ausführungsbeispiel beträgt die Hinterschneidungstiefe t_{H} etwa 17 % der Nuttiefe t_{N}. Die Belagdicke d_{BH} über der Hinterschneidung 6 beträgt etwa 25 % der Nuttiefe t_{N}.

Durch diese Ausgestaltung der Nut 4a wird der Nutquerschnitt vergrößert, ohne dass die effektive Reibfläche 5 verringert wird.

Bezugszeichenliste
- 1: Belaglamelle
- 2: Reibbelag
- 3: Trägerlamelle
- 4a: Nut gestanzt
- 4b: Nut geprägt
- 4c: Nut gerollt
- 4d: Nut gefräst
- 5: Reibfläche
- 6: Hinterschneidung
- 7a: Nutrand
- 7b: Nutrand
- 8: Nutboden
- 9: Rundung
- 10: Hinterschneidungsansatzpunkt
- 11: trapezähnlicher Querschnitt

- t_{H}: Hinterschneidungstiefe
- t_{N}: Nuttiefe
- d_{H}: Hinterschneidungsausdehnung über der Tiefe der Nut
- d_{BH}: Belagdicke über Hinterschneidung
- d_{B}: Belagdicke
- b_{N}: Nutbreite
- b_{NO}: Nutbreite an Reibfläche
- b_{NM}: Nutbreite in halber Nuttiefe
- b_{NU}: Nutbreite am Nutboden

## Patentansprüche

1. Reiblamelle (1) mit wenigstens einem wenigstens eine Nut (4a) zur Kühlmittelführung aufweisenden Reibbelag (2),
**dadurch gekennzeichnet, dass**
wenigstens eine der Nuten (4a) zur Kühlmittelführung, vorzugsweise alle Nuten (4a) zur Kühlmittelführung im Bereich eines Nutrandes (7a, 7b), vorzugsweise im Bereich beider Nutränder (7a, 7b), eine Hinterschneidung (6) aufweist bzw. aufweisen.

2. Reiblamelle (1) nach Anspruch 1,
**dadurch gekennzeichnet, dass**
die Hinterschneidungstiefe (t_{H}) mindestens 10 %, vorzugsweise 15 % bis 25 %, der Nuttiefe (t_{N}) beträgt.

3. Reiblamelle (1) nach Anspruch 1 oder 2,
**dadurch gekennzeichnet, dass**
die Hinterschneidungsausdehnung (d_{H}) über der Tiefe (t_{N}) der Nut (4a) zur Kühlmittelführung wenigstens 50 %, vorzugsweise 70 % bis 80 %, der Nuttiefe (t_{N}) beträgt.

4. Reiblamelle (1) nach einem der Ansprüche 1 bis 3,
**dadurch gekennzeichnet, dass**
die Belagdicke (d_{BH}) über der Hinterschneidung (6) wenigstens 10 %, vorzugsweise 15 % bis 30 %, der Nuttiefe (t_{N}) beträgt.

5. Reiblamelle (1) nach einem der Ansprüche 1 bis 4,
**dadurch gekennzeichnet, dass**
sich die Hinterschneidung (6) über der Tiefe (t_{N}) der Nut (4a) zur Kühlmittelführung von einem Hinterschneidungsansatzpunkt (10) bis zum Nutboden (8) erstreckt.

6. Reiblamelle (1) nach einem der Ansprüche 1 bis 5,
**dadurch gekennzeichnet, dass**
die Hinterschneidung einen trapezförmigen oder trapezformähnlichen Querschnitt (11) aufweist.

7. Reiblamelle (1) nach einem der Ansprüche 1 bis 5,
**dadurch gekennzeichnet, dass**
die Tiefenausdehnung (t_{H}) der Hinterschneidung (6) mit der Nuttiefe (t_{N}) in Richtung des Nutbodens (8) zunimmt.

8. Reiblamelle (1) nach einem der vorangegangenen Ansprüche,
**dadurch gekennzeichnet, dass**
die Tiefe (t_{N}) der Nut (4a) zur Kühlmittelführung mit der Belagdicke (d_{B}) übereinstimmt.

9. Reibbelag (2) mit wenigstens einer Nut (4a),
**dadurch gekennzeichnet, dass**
wenigstens eine der Nuten (4a) zur Kühlmittelführung, vorzugsweise alle Nuten (4a) zur Kühlmittelführung im Bereich eines Nutrandes (7a, 7b), vorzugsweise im Bereich beider Nutränder (7a, 7b), eine Hinterschneidung (6) aufweist bzw. aufweisen.

10. Reibbelag (1) nach Anspruch 9,
**dadurch gekennzeichnet, dass**
die Hinterschneidungstiefe (t_{H}) mindestens 10 %, vorzugsweise 15 % bis 25 %, der Nuttiefe (t_{N}) beträgt.

11. Reibbelag (1) nach Anspruch 9 oder 10,
**dadurch gekennzeichnet, dass**
die Hinterschneidungsausdehnung (d_{H}) über der Tiefe (t_{N}) der Nut (4a) zur Kühlmittelführung wenigstens 50 %, vorzugsweise 70 % bis 80 %, der Nuttiefe (t_{N}) beträgt.

12. Reibbelag (2) nach einem der Ansprüche 9 bis 11,
**dadurch gekennzeichnet, dass**
die Belagdicke (d_{BH}) über der Hinterschneidung (6) wenigstens 10 %, vorzugsweise 15 % bis 30 %, der Nuttiefe (t_{N}) beträgt.

13. Reibbelag (2) nach einem der Ansprüche 9 bis 12,
**dadurch gekennzeichnet, dass**
sich die Hinterschneidung (6) über der Tiefe (t_{N}) der Nut (4a) zur Kühlmittelführung von einem Hinterschneidungsansatzpunkt (10) bis zum Nutboden (8) erstreckt.

14. Reibbelag (2) nach einem der Ansprüche 9 bis 13,
**dadurch gekennzeichnet, dass**
die Hinterschneidung einen trapezförmigen oder trapezformähnlichen Querschnitt (11) aufweist.

15. Reibbelag (2) nach einem der Ansprüche 9 bis 13,
**dadurch gekennzeichnet, dass**
die Tiefenausdehnung (t_{H}) der Hinterschneidung (6) mit der Nuttiefe (t_{N}) in Richtung des Nutbodens (8) zunimmt.

16. Reibbelag (2) nach einem der Ansprüche 9 bis 15,
**dadurch gekennzeichnet, dass**
die Tiefe (t_{N}) der Nut (4a) zur Kühlmittelführung mit der Belagdicke (d_{B}) übereinstimmt.

17. Verfahren zum Einbringen einer Nut (4a) zur Kühlmittelführung in eine Reiblamelle bzw. einen Reibbelag (2) nach einem der Ansprüche 1 bis 16,
**dadurch gekennzeichnet, dass**
die wenigstens eine Nut (4a) zur Kühlmittelführung derart eingestanzt wird, dass sie im Bereich eines Nutrandes (7a, 7b), vorzugsweise im Bereich beider Nutränder (7a, 7b), eine Hinterschneidung (6) aufweist.

18. Verfahren zum Einbringen einer Nut (4a) in eine Reiblamelle bzw. einen Reibbelag (2) nach einem der Ansprüche 1 bis 16,
**dadurch gekennzeichnet, dass**
die wenigstens eine Nut (4a) zur Kühlmittelführung derart sand-, glasperlengestrahlt oder in sonstiger Weise gestrahlt wird, dass sie im Bereich eines Nutrandes (7a, 7b), vorzugsweise im Bereich beider Nutränder (7a, 7b), eine Hinterschneidung (6) aufweist.

19. Verfahren zum Einbringen einer Nut (4a) in eine Reiblamelle bzw. einen Reibbelag (2) nach einem der Ansprüche 1 bis 16,
**dadurch gekennzeichnet, dass**
die wenigstens eine Nut (4a) zur Kühlmittelführung derart eingefräst wird, dass sie im Bereich eines Nutrandes (7a, 7b), vorzugsweise im Bereich beider Nutränder (7a, 7b), eine Hinterschneidung (6) aufweist.

20. Drehmomentübertragungsaggregat, insbesondere Kupplung, Bremse oder dergleichen,
**dadurch gekennzeichnet, dass** wenigstens eine Reiblamelle (1) nach einem der Ansprüche 1 bis 8 vorgesehen ist.

## Claims

1. Friction disc (1) with at least one friction lining (2) having at least one groove (4a) for conducting coolant, **characterized in that** at least one of the grooves (4a) for conducting coolant, preferably all the grooves (4a) for conducting coolant, has or have an undercut (6) in the region of one groove edge (7a, 7b), preferably in the region of both groove edges (7a, 7b).

2. Friction disc (1) according to Claim 1, **characterized in that** the depth of the undercut (t_{H}) is at least 10%, preferably 15% to 25%, of the depth of the groove (t_{N}).

3. Friction disc (1) according to Claim 1 or 2, **characterized in that** the extent of the undercut (d_{H}) over the depth (t_{N}) of the groove (4a) for conducting coolant is at least 50%, preferably 70% to 80%, of the depth of the groove (t_{N}).

4. Friction disc (1) according to one of Claims 1 to 3, **characterized in that** the thickness of the lining (d_{BH}) over the undercut (6) is at least 10%, preferably 15% to 30%, of the depth of the groove (t_{N}).

5. Friction disc (1) according to one of Claims 1 to 4, **characterized in that** the undercut (6) extends over the depth (t_{N}) of the groove (4a) for conducting coolant from a starting point of the undercut (10) to the bottom of the groove (8).

6. Friction disc (1) according to one of Claims 1 to 5, **characterized in that** the undercut has a trapezoidal or trapezoid-like cross section (11).

7. Friction disc (1) according to one of Claims 1 to 5, **characterized in that** the extent of the depth (t_{H}) of the undercut (6) increases with the depth of the groove (t_{N}) in the direction of the bottom of the groove (8).

8. Friction disc (1) according to one of the preceding claims, **characterized in that** the depth (t_{N}) of the groove (4a) for conducting coolant coincides with the thickness of the lining (d_{B}).

9. Friction lining (2) with at least one groove (4a), **characterized in that** at least one of the grooves (4a) for conducting coolant, preferably all the grooves (4a) for conducting coolant, has or have an undercut (6) in the region of one groove edge (7a, 7b), preferably in the region of both groove edges (7a, 7b).

10. Friction lining (2) according to Claim 9, **characterized in that** the depth of the undercut (t_{H}) is at least 10%, preferably 15% to 25%, of the depth of the groove (t_{N}).

11. Friction lining (2) according to Claim 9 or 10, **characterized in that** the extent of the undercut (d_{H}) over the depth (t_{N}) of the groove (4a) for conducting coolant is at least 50%, preferably 70% to 80%, of the depth of the groove (t_{N}).

12. Friction lining (2) according to one of Claims 9 to 11, **characterized in that** the thickness of the lining (d_{BH}) over the undercut (6) is at least 10%, preferably 15% to 30%, of the depth of the groove (t_{N}).

13. Friction lining (2) according to one of Claims 9 to 12, **characterized in that** the undercut (6) extends over the depth (t_{N}) of the groove (4a) for conducting coolant from a starting point of the undercut (10) to the bottom of the groove (8).

14. Friction lining (2) according to one of Claims 9 to 13, **characterized in that** the undercut has a trapezoidal or trapezoid-like cross section (11).

15. Friction lining (2) according to one of Claims 9 to 13, **characterized in that** the extent of the depth (t_{H}) of the undercut (6) increases with the depth of the groove (t_{N}) in the direction of the bottom of the groove (8).

16. Friction lining (2) according to one of Claims 9 to 15, **characterized in that** the depth (t_{N}) of the groove (4a) for conducting coolant coincides with the thickness of the lining (d_{B}).

17. Method for forming a groove (4a) for conducting coolant in a friction disc or a friction lining (2) according to one of Claims 1 to 16, **characterized in that** the at least one groove (4a) for conducting coolant is punched in in such a way that it has an undercut (6) in the region of one groove edge (7a, 7b), preferably in the region of both groove edges (7a, 7b).

18. Method for forming a groove (4a) in a friction disc or a friction lining (2) according to one of Claims 1 to 16, **characterized in that** the at least one groove (4a) for conducting coolant is sand-blasted, glass-bead-blasted or otherwise blasted in such a way that it has an undercut (6) in the region of one groove edge (7a, 7b), preferably in the region of both groove edges (7a, 7b).

19. Method for forming a groove (4a) in a friction disc or a friction lining (2) according to one of Claims 1 to 16, **characterized in that** the at least one groove (4a) for conducting coolant is milled in in such a way that it has an undercut (6) in the region of one groove edge (7a, 7b), preferably in the region of both groove edges (7a, 7b).

20. Torque transmission unit, in particular a coupling, brake or the like, **characterized in that** at least one friction disc (1) according to one of Claims 1 to 8 is provided.

## Revendications

1. Lamelle de friction (1) avec au moins un matériau de friction (2) présentant au moins une rainure (4a) de guidage d'agent de refroidissement, **caractérisée en ce qu'**au moins une des rainures (4a) de guidage d'agent de refroidissement, de préférence toutes les rainures (4a) de guidage d'agent de refroidissement, présente ou présentent une contre-dépouille (6) dans la région d'un bord de rainure (7a, 7b), de préférence dans la région des deux bords de rainure (7a, 7b).

2. Lamelle de friction (1) selon la revendication 1, **caractérisée en ce que** la profondeur de la contre-dépouille (t_{H}) vaut au moins 10 %, de préférence 15 % à 25 % de la profondeur de la rainure (t_{N}).

3. Lamelle de friction (1) selon la revendication 1 ou 2, **caractérisée en ce que** l'extension (d_{H}) de la contre-dépouille sur la profondeur (t_{N}) de la rainure (4a) de guidage d'agent de refroidissement vaut au moins 50 %, de préférence 70 % à 80 %, de la profondeur de la rainure (t_{N}) .

4. Lamelle de friction (1) selon l'une quelconque des revendications 1 à 3, **caractérisée en ce que** l'épaisseur de matériau (d_{BH}) au-dessus de la contre-dépouille (6) vaut au moins 10 %, de préférence 15 % à 30 %, de la profondeur de la rainure (t_{N}).

5. Lamelle de friction (1) selon l'une quelconque des revendications 1 à 4, **caractérisée en ce que** la contre-dépouille (6) s'étend sur la profondeur (t_{N}) de la rainure (4a) de guidage d'agent de refroidissement depuis un point de départ (10) de la contre-dépouille jusqu'au fond (8) de la rainure.

6. Lamelle de friction (1) selon l'une quelconque des revendications 1 à 5, **caractérisée en ce que** la contre-dépouille présente une section transversale (11) de forme trapézoïdale ou approximativement trapézoïdale.

7. Lamelle de friction (1) selon l'une quelconque des revendications 1 à 5, **caractérisée en ce que** l'extension en profondeur (t_{H}) de la contre-dépouille (6) augmente avec la profondeur de la rainure (t_{N}) en direction du fond (8) de la rainure.

8. Lamelle de friction (1) selon l'une quelconque des revendications précédentes, **caractérisée en ce que** la profondeur (t_{N}) de la rainure (4a) de guidage d'agent de refroidissement coïncide avec l'épaisseur de matériau (d_{B}).

9. Matériau de friction (2) comportant au moins une rainure (4a), **caractérisé en ce qu'**au moins une des rainures (4a) de guidage d'agent de refroidissement, de préférence toutes les rainures (4a) de guidage d'agent de refroidissement, présente ou présentent une contre-dépouille (6) dans la région d'un bord de rainure (7a, 7b), de préférence dans la région des deux bords de rainure (7a, 7b).

10. Matériau de friction (2) selon la revendication 9, **caractérisé en ce que** la profondeur (t_{H}) de la contre-dépouille vaut au moins 10 %, de préférence 15 % à 25 %, de la profondeur de la rainure (t_{N}).

11. Matériau de friction (2) selon la revendication 9 ou 10, **caractérisé en ce que** l'extension (d_{H}) de la contre-dépouille sur la profondeur (t_{N}) de la rainure (4a) de guidage d'agent de refroidissement vaut au moins 50 %, de préférence 70 % à 80 %, de la profondeur de la rainure (t_{N}).

12. Matériau de friction (2) selon l'une quelconque des revendications 9 à 11, **caractérisé en ce que** l'épaisseur de matériau (d_{BH}) au-dessus de la contre-dépouille (6) vaut au moins 10 %, de préférence 15 % à 30 %, de la profondeur de la rainure (t_{N}).

13. Matériau de friction (2) selon l'une quelconque des revendications 9 à 12, **caractérisé en ce que** la contre-dépouille (6) s'étend sur la profondeur (t_{N}) de la rainure (4a) de guidage d'agent de refroidissement depuis un point de départ (10) de la contre-dépouille jusqu'au fond (8) de la rainure.

14. Matériau de friction (2) selon l'une quelconque des revendications 9 à 13, **caractérisé en ce que** la contre-dépouille présente une section transversale (11) de forme trapézoïdale ou approximativement trapézoïdale.

15. Matériau de friction (2) selon l'une quelconque des revendications 9 à 13, **caractérisé en ce que** l'extension en profondeur (t_{H}) de la contre-dépouille (6) augmente avec la profondeur de la rainure (t_{N}) en direction du fond (8) de la rainure.

16. Matériau de friction (2) selon l'une quelconque des revendications 9 à 15, **caractérisé en ce que** la profondeur (t_{N}) de la rainure (4a) de guidage d'agent de refroidissement coïncide avec l'épaisseur de matériau (d_{B}).

17. Procédé de formation d'une rainure (4a) de guidage d'agent de refroidissement dans une lamelle de friction ou un matériau de friction (2) selon l'une quelconque des revendications 1 à 16, **caractérisé en ce que** l'on taille l'au moins une rainure (4a) de guidage d'agent de refroidissement de telle manière qu'elle présente une contre-dépouille (6) dans la région d'un bord de rainure (7a, 7b), de préférence dans la région des deux bords de rainure (7a, 7b).

18. Procédé de formation d'une rainure (4a) dans une lamelle de friction ou un matériau de friction (2) selon l'une quelconque des revendications 1 à 16, **caractérisé en ce que** l'on grenaille l'au moins une rainure (4a) de guidage d'agent de refroidissement avec du sable, des billes de verre ou d'une autre façon, de telle manière qu'elle présente une contre-dépouille (6) dans la région d'un bord de rainure (7a, 7b), de préférence dans la région des deux bords de rainure (7a, 7b).

19. Procédé de formation d'une rainure (4a) dans une lamelle de friction ou un matériau de friction (2) selon l'une quelconque des revendications 1 à 16, **caractérisé en ce que** l'on fraise l'au moins une rainure (4a) de guidage d'agent de refroidissement de telle manière qu'elle présente une contre-dépouille (6) dans la région d'un bord de rainure (7a, 7b), de préférence dans la région des deux bords de rainure (7a, 7b).

20. Ensemble de transmission de couple de rotation, en particulier embrayage, frein ou analogue, **caractérisé en ce qu'**il est prévu au moins une lamelle de friction (1) selon l'une quelconque des revendications 1 à 8.
